# EUROPÄISCHE PATENTANMELDUNG

(11) **EP 1 103 443 A1**
(43) Veröffentlichungstag der Anmeldung: **30.05.2001**
(21) Anmeldenummer: 00124882.2
(22) Anmeldetag: 15.11.2000
(51) Int. Cl.: B62B 13/18, B62B 19/02

(54) **Transporthandwagen mit Rädern und Kufen**

(30) Priorität: 19.11.1999 DE 29920320 U
(71) Anmelder: Hagemeister, Dirk, 42657 Solingen (DE); Zielonka, Richard, 42657 Solingen (DE)
(72) Erfinder: Hagemeister, Dirk, 42657 Solingen (DE); Zielonka, Richard, 42657 Solingen (DE)

(57) **Zusammenfassung**

Ein Handwagen mit Rädern und Kufen. Die Kufen (2) heben heruntergeklappt die Räder (1) an und der Handwagen lässt sich wie ein Schlitten hinter herziehen. Die Problematik bei herkömmlichen Handwagen besteht darin, dass die Räder bei weichem, schmutzigem und rutschigem Untergrund, sowie in hohem Gras verschmutzen und sogar blockieren. Die Kufen ermöglichen einen komfortablen Übergang zu festem Untergrund, wo dann wieder die Räder eingesetzt werden, indem man die Kufen zurückklappt. Eingesetzt werden kann der Transportwagen in verschiedenen Geländearten zum Transportieren von Lasten.

## Beschreibung

Transporthandwagen üblicher Bauart weisen an der Achse zwei Räder auf. Im einfachsten Fall befinden sich zwei Räder an den Enden einer Achse.

Solche Handwagen werden zum Transportieren von Taschen, Koffern, Kisten und dergleichen verwendet, indem man den Handwagen etwas kippt und mit dem zu transportierenden Gegenstand, auf der Ablage oder Ablagegestells hinter sich herzieht. Die Last wird von der Achse aufgefangen und macht das Bewegen schwerer Gegenstände möglich.

Eine Beförderung von schweren Gegenständen in unregelmäßigem Gelände ist damit nur schwer möglich, da die Räder sich mit Gras, Schmutz, Lehm festsetzen und in nachgiebigem Untergrund einsinken. Auch die Verwendung verschiedener Radgrößen und Formen beseitigt diese Problematik nicht.

Der im Schutzanspruch 1 angegebenen Erfindung liegt das Problem zugrunde, eine Beförderungsmöglichkeit zu schaffen, die in eingeklapptem Zustand der Kufen (2) die Beförderung auf ebenem, in ausgeklapptem Zustand der Kufen (2) die Beförderung in unebenem Gelände ermöglicht, indem der Handwagen wie ein Schlitten nachgezogen wird.

Dieses Problem wird mit den in Schutzanspruch 1 aufgeführten Merkmalen durch Anbringung von zwei unabhängig beweglichen und klappbaren Kufen (2) an der Radachse gelöst. Die Kufen, weisen eine um einige Zentimeter längere Verbindung zur Radachse auf als der Radius der ebenfalls an der Radachse befestigten Räder aufweist. Dadurch werden das Gestell und die Räder des Transporthandwagens um die Differenz von Radius der Räder und Länge der Verbindungsstangen von den Kufen zur Achse angehoben, so dass die Räder den Kontakt zum Untergrund verlieren und außer Funktion sind. Anschließend kann nun der Transporthandwagen wie ein Schlitten hinterhergeschleift werden.

Mit der Erfindung wird erreicht, dass die eingeschränkte Nutzbarkeit von Rädern bei Transporthandwagen in unebenem und nachgiebigem Terrain durch Verwendung der beweglichen Kufen (2) umgangen wird.

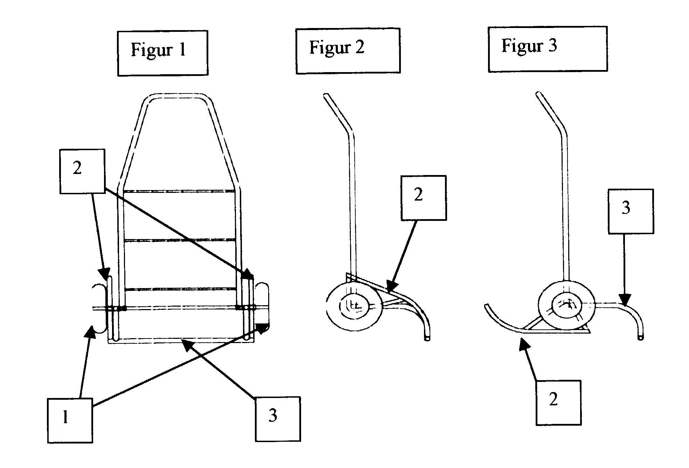

## Patentansprüche

1. Transporthandwagen, zur Aufnahme und Beförderung von Taschen, Koffern, Kisten und sonstigen schweren Gegenständen, wobei
- der Transporthandwagen Räder und Kufen aufweist,
- die an der Radachse rechts und links, von der Vorderansicht aus betrachtet, angebrachten Kufen (2) lose und unabhängig umklappbar sind,
- in nach oben geklapptem Zustand die Kufen (2) den Kontakt der Räder (1) mit dem Untergrund ermöglichen,
- in heruntergeklapptem Zustand die Kufen (2) den Handwagen nebst Rädern (1) anheben und den Kontakt der Räder mit dem Untergrund unterbinden,
- in heruntergeklapptem Zustand die Kufen (2) ein Hinterherschleifen des Transporthandwagens wie bei einem Schlitten ermöglichen.
